# DEMANDE DE BREVET EUROPEEN

(11) **EP 4 600 065 A1**
(43) Date de publication de la demande: **13.08.2025**
(21) Numéro de dépôt: 25154870.7
(22) Date de dépôt: 30.01.2025
(51) Int. Cl.: B60K 15/03, B60K 15/04, F16L 37/098, F16L 37/133

(54) **SYSTÈME D'INJECTION POUR TEST DE RÉSERVOIR DE STOCKAGE DE GPL**

(30) Priorité: 06.02.2024 FR 2401166
(71) Demandeur: Renault s.a.s, 92100 Boulogne Billancourt (FR)
(72) Inventeur: BLANCHE, PIERRE, 72100 LE MANS (FR); DELAURE, NICOLAS, 78100 LE MANS (FR); LE-GLEAU, GABRIEL, 72100 LE MANS (FR)

(57) **Abrégé**

La présente invention concerne un réservoir de stockage (2) au sein d'un véhicule à moteur à combustion interne configuré pour stocker un carburant, comprenant un puits de jauge (8) ouvert sur un volume interne (6) du réservoir de stockage (2) et faisant saillie du réservoir de stockage (2), le puits de jauge (8) étant délimité au moins par un pourtour extérieur (28), caractérisé en ce que le puits de jauge (8) comprend une gorge (12) ménagée sur le pourtour extérieur (28) du puits de jauge (8).

## Description

La présente invention se rapporte au domaine du stockage d'un carburant et concerne plus particulièrement un réservoir de stockage destiné à transporter et stocker ledit carburant pour un véhicule à combustion.

Les réservoirs de gaz de pétrole liquéfié (GPL) présentent généralement une forme cylindrique ou torique. Les réservoirs sont généralement ajoutés après la fabrication du véhicule dans une zone ne présentant pas de risque en cas de choc.

La règlementation oblige de tester les réservoirs de GPL tous les huit ans notamment parce que le stockage du GPL applique une pression continue dans le réservoir de stockage. Pour réaliser ce test, un outil de mise en pression est vissé au puits de jauge du réservoir par une pluralité de vis. De l'eau est ensuite injectée dans le réservoir jusqu'à atteindre une pression maximale de 60 bars. Tous les réservoirs de GPL doivent subir ce test pour que le véhicule puisse être équipé du réservoir puis être mis en circulation.

Tous les réservoirs de GPL doivent également subir une mise en pression avec de l'eau avant d'être placés dans un véhicule. Si le vissage et le dévissage de l'outil de mise en pression impliquent un temps négligeable pour un véhicule isolé, à l'échelle d'une chaine de production pour des milliers de véhicules cela fait perdre un temps considérable aux constructeurs. Le problème est donc que la fixation du système d'injection n'est pas optimisée et implique une perte de temps considérable pour les constructeurs automobiles.

Il est connu du document EP2115344B1 de réduire le nombre de vis nécessaire à la fixation du système d'injection. Ce système comprend une pièce de raccordement comprenant un premier filetage configuré pour coopérer avec un deuxième filetage du réservoir complémentaire du premier filetage.

Un tel système demande tout de même un certain temps d'installation et de démontage malgré la réduction à une vis. En effet, un vissage demande du temps surtout lorsque qu'il n'y a qu'un seul système de fixation, car il est nécessaire de rajouter des filets afin d'augmenter la surface de contact entre le réservoir et la pièce de raccordement. Plus de surface à visser demande forcément plus de temps d'installation et de démontage.

La présente invention s'inscrit dans ce contexte en proposant une amélioration par rapport aux systèmes de l'art antérieur. L'invention a ainsi pour objet un réservoir de stockage comprenant un puits de jauge apte à recevoir un système d'injection sans que celui-ci ne soit vissé au puits de jauge, de sorte à minimiser le temps de montage et de démontage lors des tests.

La présente invention propose un réservoir de stockage au sein d'un véhicule à moteur à combustion interne configuré pour stocker un carburant, comprenant un puits de jauge ouvert sur un espace interne du réservoir de stockage et faisant saillie du réservoir de stockage, le puits de jauge étant délimité au moins par un pourtour extérieur, caractérisé en ce que le puits de jauge comprend une gorge ménagée sur le pourtour extérieur.

Le réservoir de stockage est configuré pour stocker un carburant tel que du GPL ou gaz de pétrole liquéfié. Le carburant permet l'alimentation d'au moins un moteur d'un véhicule équipé du réservoir de stockage. Le réservoir de stockage comprend une surface délimitant un volume interne dans lequel est stocké le GPL. Ce réservoir de stockage présente par exemple une forme torique. Le réservoir de stockage comprend au moins une ouverture entre le volume interne et l'extérieur, qui permet un passage de carburant et donc un remplissage du réservoir de stockage. Cette ouverture est délimitée par un puits de jauge, qui s'étend à l'extérieur du réservoir. Le puits de jauge présente une dimension minimale permettant de placer la gorge sur son pourtour extérieur, qui correspond à sa face opposée à l'ouverture entre le volume interne et l'extérieur. Une telle dimension minimale est mesurée entre une extrémité du puits de jauge la plus proche de la surface qui délimite le volume interne et une partie supérieure du puits de jauge, cette partie supérieure étant l'extrémité opposée à l'extrémité la plus proche de la surface qui délimite le volume interne. La gorge est disposée de façon à ce que celle-ci soit à distance de l'extrémité la plus proche de la surface qui délimite le volume interne et à distance de la paroi supérieure du puits de jauge.

Selon une caractéristique optionnelle de l'invention, la gorge est configurée pour interagir avec un organe de maintien d'un système d'injection de fluide.

La gorge présente une forme permettant à l'organe de maintien d'être inséré dans celle-ci. La gorge est par exemple disposée sur l'intégralité du pourtour extérieur du puits de jauge, c'est-à-dire sur tout un diamètre extérieur de celui-ci.

L'organe de maintien est solidaire de la gorge lorsque celui-ci a été inséré dans la gorge. La désolidarisation de l'organe de maintien et de la gorge demande une intervention extérieure pouvant par exemple être celle d'un opérateur. L'intervention de l'opérateur est rapide, il est nécessaire de glisser ou de faire basculer l'organe de maintien dans la gorge. Cette configuration est avantageuse du fait que ces deux modes de réalisation sont plus rapides qu'un vissage.

L'invention concerne également un système d'injection de fluide dans le réservoir de stockage tel qu'évoqué précédemment, comprenant un organe de maintien comprenant au moins une nervure configurée pour coopérer avec la gorge.

Le système d'injection est un système qui permet de remplir le réservoir de stockage à l'aide d'un fluide. La nervure de l'organe de maintien est assimilable à une protubérance faisant saillie d'une face de l'organe de maintien. La nervure présente des dimensions permettant à celle-ci d'être insérée dans la gorge, la combinaison de la nervure et de la gorge étant configurée pour être maintenue en position indépendamment de la pression exercée par le fluide au sein du réservoir, notamment une pression de l'ordre de 60 bars correspondant à un test de mise sous pression du réservoir.

Selon une autre caractéristique optionnelle de l'invention, l'organe de maintien est une lame incurvée.

Selon un premier mode de réalisation, la lame incurvée comprend la nervure sur une face intérieure. On entend par « face intérieure » de la lame incurvée une face destinée à être en regard du puits de jauge. La nervure est configurée pour glisser dans la gorge du puits de jauge.

Selon une autre caractéristique optionnelle de l'invention, l'organe de maintien comprend au moins deux griffes.

Selon un deuxième mode de réalisation, les griffes comprennent une nervure sur leurs faces intérieures, c'est-à-dire leurs faces destinées à être en regard du puits de jauge. Les griffes sont aptes à prendre au moins deux positions, entre lesquelles elles alternent par basculement, avec une première position "refermée" où elles sont dans la gorge et une deuxième position "ouverte" dans laquelle elles sont en dehors de celle-ci.

Selon une autre caractéristique optionnelle de l'invention, le système d'injection comprend un pistolet destiné à être inséré dans le puit de jauge du réservoir, l'organe de maintien étant porté par le pistolet.

Le pistolet permet l'injection de fluide au sein du réservoir de stockage. L'organe de maintien bloque le pistolet en position dans le puits de jauge lorsque la nervure de l'organe de maintien est en position dans la gorge.

Selon une autre caractéristique optionnelle de l'invention, le système d'injection comprend un ressort disposé entre l'organe de maintien et le pistolet.

Lorsque l'organe de maintien est en position dans la gorge, le pistolet est comprimé par le ressort afin d'être maintenu en position. Le ressort est taré de manière à supporter une pression provenant de l'intérieur du réservoir de stockage sans se déformer.

Selon une autre caractéristique optionnelle de l'invention, le système d'injection comprend un organe d'étanchéité configuré pour être disposé entre le puits de jauge et le pistolet.

Lorsque l'organe de maintien est en position dans la gorge, le pistolet écrase l'organe d'étanchéité qui peut par exemple être un joint qui assure l'étanchéité. L'écrasement de l'organe d'étanchéité dépend du ressort comprimant le pistolet, l'écrasement du ressort permettant au système d'injection de maintenir une pression maximale de 60 bars dans le réservoir de stockage.

Selon une autre caractéristique optionnelle de l'invention, l'organe d'étanchéité est un joint torique.

L'organe d'étanchéité permet d'assurer l'étanchéité entre un bord libre de la partie supérieure du puits de jauge et une butée circulaire du pistolet.

L'invention concerne en outre un ensemble de test comprenant un réservoir de stockage tel qu'évoqué précédemment et un système d'injection tel qu'évoqué précédemment.

L'invention est enfin relative à un procédé de test de mise en pression du réservoir de stockage tel qu'évoqué précédemment utilisant le système d'injection tel qu'évoqué précédemment, comprenant au moins :
- une étape d'insertion du pistolet dans le puits de jauge,
- une étape de coopération de l'organe de maintien avec la gorge du puits de jauge,
- une étape de mise en pression du réservoir de stockage par injection de fluide au travers du puits de jauge.

L'étape d'insertion du pistolet dans le puits de jauge peut par exemple être réalisée par une personne extérieure réalisant les tests sur les réservoirs de stockage des véhicules de série.

L'étape de mise en pression du réservoir de stockage correspond à une injection de fluide dans le réservoir de stockage afin de vérifier son étanchéité jusqu'une certaine pression. La pression maximale pouvant être testée dans ces réservoirs est 60 bars.

Selon une autre caractéristique optionnelle de l'invention, au cours de l'étape de coopération la nervure de la lame incurvée glisse dans la gorge du puits de jauge.

Dans ce mode de réalisation, la nervure de la lame incurvée est configurée pour être glissée dans la gorge du puits de jauge par un opérateur extérieur.

Selon une autre caractéristique optionnelle de l'invention, au cours de l'étape de coopération la nervure des griffes vient en prise dans la gorge du puits de jauge.

Selon ce mode de réalisation les griffes sont configurées pour se refermer jusqu'à venir en contact avec la gorge. Les griffes sont configurées pour maintenir le pistolet en position. Ainsi, les griffes permettent de solidement s'arrimer à la gorge afin de maintenir la pression dans le réservoir.

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
[fig 1] est une vue de coupe du puits de jauge du réservoir de stockage comprenant la gorge sur le pourtour du puits de jauge ;
[fig 2] est une vue du système d'injection rendu solidaire du réservoir par une coopération entre la gorge et l'organe de maintien ;
[fig 3a] est une vue de l'organe de maintien selon un premier mode de réalisation lorsque la lame incurvée est glissée dans la gorge du puits de jauge ;
[fig 3b] est une vue du système d'injection dans laquelle l'organe de maintien a été retiré pour illustrer un système de blocage de cet organe de maintien ;
[fig 4] est une vue de l'organe de maintien selon un deuxième mode de réalisation où il prend la forme de griffes, qui sont ici dans une position dans laquelle elles sont refermées dans la gorge du puits de jauge.

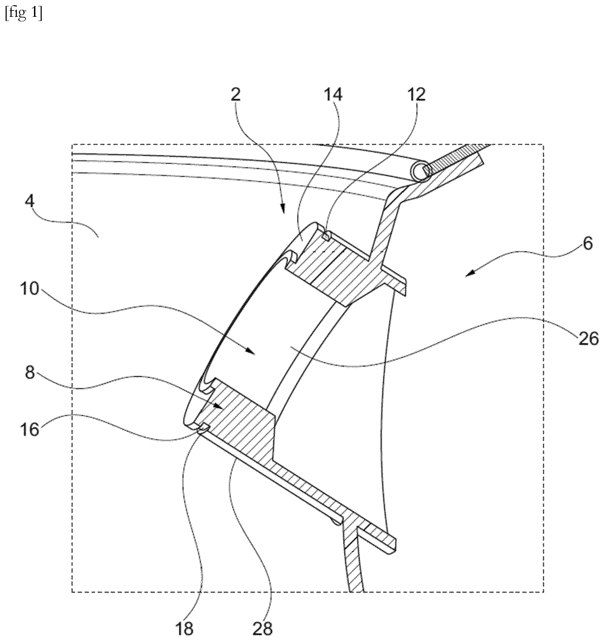

Sur la figure 1 est illustrée une vue de coupe d'un réservoir de stockage 2 dans lequel est stocké et transporté du carburant. Le carburant transporté peut à titre non limitatif être du GPL ou gaz de pétrole liquéfié. Le réservoir de stockage 2 comprend une paroi 4 bombée définissant un volume interne 6 dans lequel est stocké le GPL. Le réservoir de stockage 2 présente ici une forme torique.

Le réservoir de stockage 2 comprend un puits de jauge 8 faisant saillie d'une face extérieure de la paroi 4 du réservoir de stockage 2, c'est-à-dire une face opposée au volume interne 6. Le puits de jauge 8 est incliné par rapport à la paroi 4 de façon à faciliter le remplissage du réservoir de stockage 2. Le puits de jauge 8 comprend un trou 10 permettant un accès entre l'extérieur et l'intérieur du réservoir de stockage 2. Le trou 10 du puits de jauge 8 entre l'intérieur du réservoir de stockage 2 et l'extérieur est de forme circulaire.

Le puits de jauge 8 comprend un pourtour intérieur 26 en regard du trou 10 et un pourtour extérieur 28 opposé au pourtour intérieur 26. Le puits de jauge 8 présente une partie supérieure 14 qui correspond à son bord libre et qui est disposée à l'opposé de la paroi 4 du réservoir de stockage 2.

Le puits de jauge 8 comprend une gorge 12 circulaire sur l'intégralité de son pourtour extérieur 28. La gorge 12 est décalée longitudinalement par rapport à la partie supérieure 14 du puits de jauge 8 et par rapport au trou 10, c'est-à-dire qu'elle est à distance à la fois de la partie supérieure 14 et du trou 10. Tel que visible sur la figure 1, la gorge 12 est néanmoins plus proche de la partie supérieure 14 du puits de jauge 8 que du trou 10. La gorge 12 s'étend dans un plan parallèle à la partie supérieure 14 du puits de jauge 8.

La gorge 12 correspond à un évidement cylindrique de diamètre inférieur à celui du pourtour extérieur 28 du puits de jauge 8 en étant coaxiale au cylindre formant le puits de jauge 8. La gorge 12 comprend une face plane supérieure 16 et une face plane inférieure 18 espacées par l'épaisseur du cylindre de la gorge 12. La face plane supérieure 16 est celle ayant la plus grande distance par rapport à la paroi 4 du réservoir de stockage 2 et la face plane inférieure 18 est celle présentant la distance la plus courte par rapport à la paroi 4. Ainsi sur la vue de coupe de la figure 1, la gorge 12 est de forme rectangulaire.

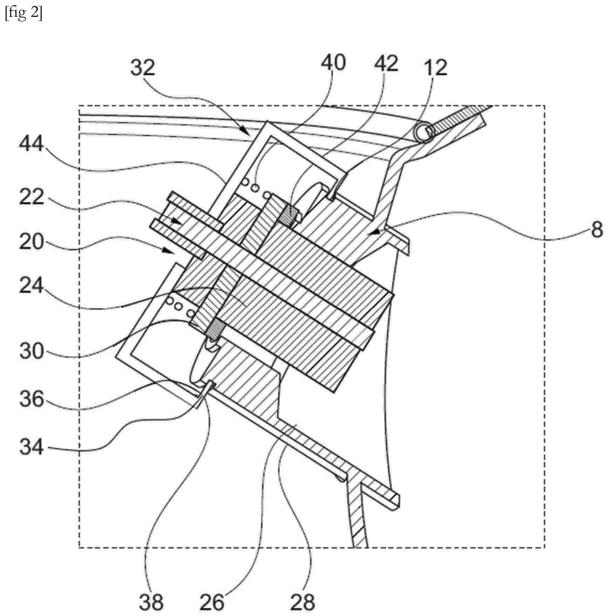

La figure 2 décrit la coopération entre un système d'injection 20 et le réservoir de stockage 2, qui à eux deux forment un ensemble de test de mise sous pression. Le système d'injection 20 comprend un pistolet 22 inséré dans le réservoir de stockage 2 et plus particulièrement au sein du puits de jauge 8, de telle manière à ce qu'il puisse y déverser un fluide. Le pistolet 22 comprend une portion inférieure 24 cylindrique, destinée à être insérée au moins partiellement au sein du puits de jauge 8 et comprenant une ouverture par laquelle est déversée le fluide. La portion inférieure 24 du pistolet 22 est en regard avec un pourtour intérieur 26 du puits de jauge 8 opposé au pourtour extérieur 28 du puits de jauge 8.

Le fluide est configuré pour traverser le pistolet 22, le fluide est mis en pression en aval du pistolet 22 pour être envoyé dans le réservoir de stockage 2. Le moyen de mise en pression du fluide n'est pas représenté sur les figures mais peut être assimilé à une pompe haute pression.

Le pistolet 22 comprend une butée cylindrique 30 destinée à empêcher une insertion trop importante du pistolet 22 au sein du puits de jauge 8. La butée cylindrique 30 est un cylindre présentant un diamètre supérieur au diamètre de la portion inférieure 24 du pistolet 22. La portion inférieure 24 du pistolet 22 est coaxiale avec la butée cylindrique 30 du pistolet 22.

Dans un autre mode de réalisation la butée cylindrique 30 n'est pas comprise sur l'intégralité du pourtour du pistolet 22. Autrement dit, la butée cylindrique 30 correspond alors à une pluralité de points de butée répartis sur le pourtour du pistolet 22.

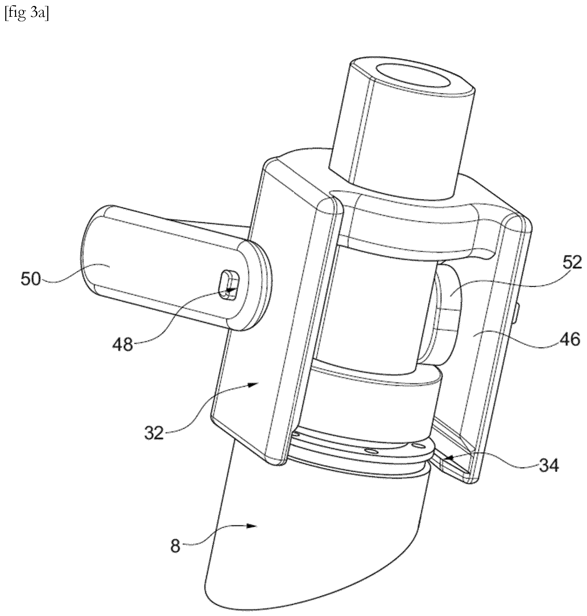

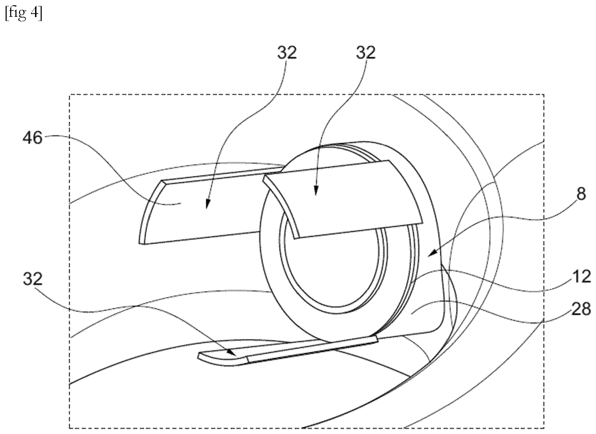

La figure 2 nous montre aussi l'organe de maintien 32, celui-ci comprend une nervure 34 de dimension sensiblement inférieure à la gorge 12 du puits de jauge 8 de façon que la nervure 34 puisse être insérée dans la gorge 12 du puits de jauge 8. La nervure 34 est de forme rectangulaire, celle-ci comprend une facette supérieure 36 et une facette inférieure 38. La facette supérieure 36 est configurée pour être en contact avec la face supérieure 16 de la gorge 12 lorsque l'organe de maintien 32 est en prise dans la gorge 12. L'organe de maintien 32 sera décrit plus précisément par la suite en relation avec les figures 3a et 4, qui illustrent cet organe de maintien 32 selon deux variantes de représentation.

Le système d'injection 20 comprend un ressort 40 disposé entre l'organe de maintien 32 et la butée cylindrique 30 du pistolet 22. La force appliquée par le ressort 40 lorsque celui-ci est comprimé permet au pistolet 22 d'être maintenu en position dans le puits de jauge 8 lorsque l'organe de maintien 32 est en prise dans la gorge 12.

Le système d'injection 20 comprend aussi un organe d'étanchéité 42 compris entre la butée cylindrique 30 du pistolet 22 et la partie supérieure 14 du puits de jauge 8. On comprend que l'organe d'étanchéité 42 est au contact de la butée cylindrique à l'opposé du ressort 40. L'organe d'étanchéité 42 peut par exemple être un joint torique.

La partie supérieure 14 du puits de jauge 8 correspond à une zone de réception de l'organe d'étanchéité 42.

L'organe d'étanchéité 42 est dimensionné de manière à supporter une pression provenant de l'intérieur du réservoir de stockage 2 sans générer de fuite. De la même manière, le ressort 40 est dimensionné de manière qu'il n'y ait pas de soulèvement du pistolet 22 lorsque l'intérieur du réservoir de stockage 2 est sous pression. La combinaison du ressort 40 et de l'organe d'étanchéité 42 permet de maintenir la pression au sein du réservoir de stockage 2 lors de tests de mise sous pression du réservoir de stockage 2.

L'organe de maintien 32, tel qu'il est représenté à la figure 2, comprend une tôle de support 44 parallèle aux facettes 36, 38 de la nervure 34. Le ressort 40 est en appui sur la tôle de support 44 de l'organe de maintien 32. La tôle de support 44 dispose d'une épaisseur permettant de supporter la force du ressort 40 sans que celle-ci ne se plie ou se déforme.

La facette supérieure 36 de la nervure 34 est apte à supporter et transmettre à la face supérieure 16 de la gorge 12 l'effort transmis par le ressort 40 afin que le pistolet 22 reste dans sa position.

La figure 3a représente un premier mode de réalisation de l'organe de maintien 32 dans lequel l'organe de maintien 32 comprend une lame incurvée. Bien que l'organe de maintien 32 soit ici représenté de façon isolée à des fins d'illustration, on comprend qu'il est solidarisé au pistolet 22. La lame incurvée présente une surface intérieure 46, destinée à être positionnée en regard du puits de jauge 8. La nervure 34 est portée par cette surface intérieure 46 de la lame incurvée. À titre non limitatif, la nervure 34 est ici disposée sur une extrémité libre de la lame incurvée, mais elle peut être disposée à distance de cette extrémité libre.

La lame incurvée est configurée pour être glissée autour du puits de jauge 8, tandis que la nervure 34 est glissée dans la gorge 12 du puits de jauge 8. Une telle fixation rend solidaire la lame incurvée du réservoir de stockage 2 suivant l'axe d'extension du puits de jauge 8.

Dans ce mode de réalisation, le système d'injection 20 comprend aussi un système de blocage 48 du pistolet 22 comprenant une poignée de fixation 50 et au moins une came de blocage 52. La came de blocage 52 est solidaire de la poignée de fixation 50 ; ainsi, lorsqu'un mouvement est effectué sur la poignée de fixation 50, celui-ci est répercuté sur la came de blocage 52.

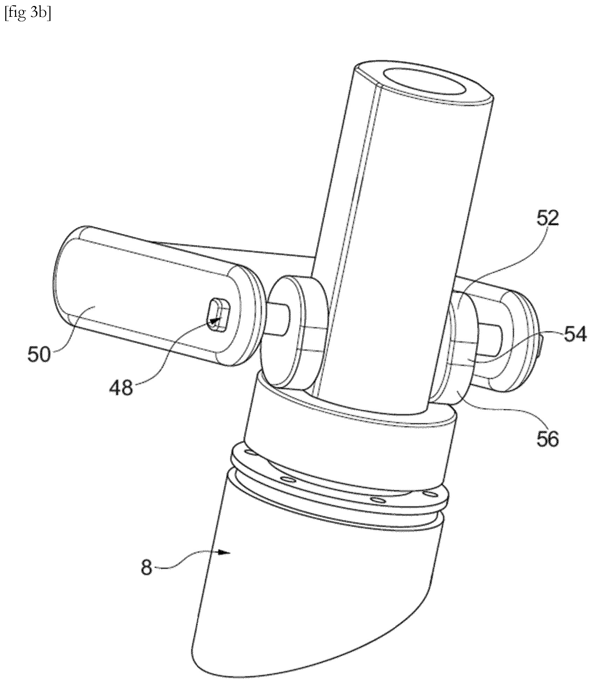

La came de blocage 52 comprend au moins une portion plane 54 et une portion bombée 56. La portion plane 54 et la portion bombée 56 sont configurées pour être au contact de l'organe d'étanchéité 42 de façon alternative, selon deux configurations qui seront décrites ci-après. La came de blocage 52 est représentée plus précisément sur la figure 3b.

La lame incurvée est une tôle pliée à 180°. La tôle est pliée de façon que son diamètre intérieur soit supérieur au diamètre du pourtour extérieur 28 du puits de jauge 8. La tôle est pliée de manière à faire un arc de cercle.

Lorsque la lame incurvée est glissée autour du pourtour extérieur 28 du puits de jauge 8, la nervure 34 est insérée dans la gorge 12 maintenant ainsi le pistolet 22 en place de façon à ce que ce pistolet 22 soit en position pour être inséré dans le trou 10 du puits de jauge 8. Le système de blocage 48 est configuré pour être actionné par un opérateur. En effet, la poignée de fixation 50 comprend au moins deux configurations. La première configuration est une configuration « libre » dans laquelle la lame incurvée ainsi que le pistolet 22 peuvent être désassemblés du réservoir de stockage 2. La poignée de fixation 50 comprend une deuxième configuration dite « de compression » dans laquelle la came de blocage 52 comprime l'assemblage ressort 40, pistolet 22 et organe d'étanchéité 42 afin de maintenir une pression maximale de 60 bars au sein du volume intérieur 6 du réservoir de stockage 2 au cours d'un procédé de test de mise sous pression qui sera décrit par la suite. Dans la première configuration libre de la poignée de fixation 50, la portion plane 54 de la came de blocage 52 est au contact de l'organe d'étanchéité 42, tandis que dans sa deuxième configuration de compression c'est la portion bombée 56 de la came de blocage 52 qui est au contact de l'organe d'étanchéité 42. On comprend que le passage de la première configuration libre à la deuxième configuration de compression de la poignée de fixation 50 entraîne une rotation de la came de blocage 52.La figure 4 représente un autre mode de réalisation de l'organe de maintien 32 dans lequel l'organe de maintien 32 comprend une pluralité de griffes comprenant chacune une nervure 34 sur leur face intérieure, c'est-à-dire leur face en regard du puits de jauge 8 lorsque l'organe de maintien 32 est en prise dans la gorge 12. La nervure 34 est disposée sur l'extrémité inférieure de la griffe, c'est-à-dire son bord libre.

Les griffes sont aptes à prendre au moins deux positions, entre lesquelles elles alternent par basculement, avec une première position "refermée" et une deuxième position "ouverte".

Dans ce mode de réalisation, le pistolet 22 comprend un système d'ouverture et de fermeture des griffes non représenté sur les figures. En effet, les griffes sont configurées pour se fermer de manière à passer de la deuxième position à la première position. Lorsque les griffes sont dans la première position, celles-ci sont positionnées de façon que les nervures 34 soient insérées dans la gorge 12 du puits de jauge 8. Ainsi, l'organe de maintien 32 est solidaire du pistolet 22, cette configuration réduisant le nombre de pièces à ajouter lors du montage du système d'injection 20 sur le réservoir de stockage 2.

Lorsque le système d'ouverture et de fermeture fait passer les griffes dans leur position refermée et que le pistolet 22 est inséré au sein du puits de jauge 8, les nervures 34 maintiennent le pistolet 22 en place de façon que l'assemblage ressort 40, pistolet 22 et organe d'étanchéité 42 maintienne une pression maximale de 60 bars au sein du réservoir de stockage 2 au cours du procédé de test de mise sous pression.

La présente invention comprend un procédé d'assemblage du système d'injection 20 dans le réservoir de stockage 2.

Le procédé de test de mise sous pression du réservoir de stockage 2 va maintenant être décrit. Selon l'invention, le procédé de test comprend au moins une étape d'insertion du pistolet 22 dans le puits de jauge 8, une étape de coopération de l'organe de maintien 32 avec la gorge 12 du puits de jauge 8 et une étape de mise en pression du réservoir de stockage 2 par injection de fluide au travers du puits de jauge 8.

Les étapes précédemment citées sont avantageusement mises en oeuvre dans l'ordre décrit, mais peuvent être mises en oeuvre selon un autre ordre sans pour autant sortir du cadre de l'invention, avec notamment l'étape de coopération intervenant avant l'étape d'insertion.

On comprend que l'étape de coopération de l'organe de maintien 32 avec la gorge 12 du puits de jauge 8 dépend de la configuration de l'organe de maintien 12. En effet, dans le premier mode de réalisation l'organe de maintien 12 comprend la lame incurvée et nécessite le glissement de la lame incurvée par un opérateur sur le pourtour extérieur 14 du puits de jauge 8. La poignée de fixation 50 peut alors être déplacée de sa première configuration à sa deuxième configuration par un opérateur, insérant ainsi le pistolet 22 dans le trou 10 du puits de jauge 8 et comprimant ainsi l'assemblage ressort 40, pistolet 22 et organe d'étanchéité 42.

Au contraire, dans l'autre mode de réalisation les griffes de l'organe de maintien 32 peuvent être refermées directement après l'étape d'insertion du pistolet 22 dans le puits de jauge 8. Lorsque l'étape d'insertion du pistolet 22 dans le puits de jauge 8 est terminée, l'étape de coopération de l'organe de maintien 32 avec la gorge 12 du puits de jauge 8 débute. Dans ce mode de réalisation, la fermeture des griffes est automatique, l'étape peut par exemple être enclenchée par un opérateur par l'activation du système de fermeture ou bien être automatique.

Le procédé de test est appliqué à tous les réservoirs de stockage de GPL des véhicules sortant des usines.

Bien sûr, l'invention n'est pas limitée aux exemples qui viennent d'être décrits et de nombreux aménagements peuvent être apportés à ces exemples sans sortir du cadre de l'invention.

L'invention, telle qu'elle vient d'être décrite, atteint bien le but qu'elle s'était fixée, et permet de proposer un réservoir de stockage permettant de réduire le temps de test d'étanchéité dudit réservoir. Des variantes non décrites ici pourraient être mises en oeuvre sans sortir du contexte de l'invention, dès lors que, conformément à l'invention, elles comprennent un réservoir de stockage avec un puits de jauge comprenant une gorge conforme à l'invention.

## Revendications

1. Réservoir de stockage (2) au sein d'un véhicule à moteur à combustion interne configuré pour stocker un carburant, comprenant un puits de jauge (8) ouvert sur un volume interne (6) du réservoir de stockage (2) et faisant saillie du réservoir de stockage (2), le puits de jauge (8) étant délimité au moins par un pourtour extérieur (28), **caractérisé en ce que** le puits de jauge (8) comprend une gorge (12) ménagée sur le pourtour extérieur (28).

2. Réservoir de stockage (2) selon la revendication précédente, dans lequel la gorge (12) est configurée pour interagir avec un organe de maintien (32) d'un système d'injection (20) de fluide.

3. Système d'injection (20) de fluide dans le réservoir de stockage (2) selon l'une quelconque des revendications précédentes, comprenant un organe de maintien (32) comprenant au moins une nervure (34) configurée pour coopérer avec la gorge (12).

4. Système d'injection (20) de fluide selon la revendication précédente, dans lequel l'organe de maintien (32) est une lame incurvée.

5. Système d'injection (20) de fluide selon la revendication 3, dans lequel l'organe de maintien (32) comprend au moins deux griffes.

6. Système d'injection (20) de fluide selon l'une des revendications 4 à 6, comprenant un pistolet (22) destiné à être inséré dans le puit de jauge (8) du réservoir de stockage (2), l'organe de maintien (32) étant porté par le pistolet (22).

7. Système d'injection (20) selon la revendication précédente, comprenant un ressort (40) disposé entre l'organe de maintien (32) et le pistolet (22).

8. Système d'injection (20) selon l'une des revendications 6 et 7, comprenant un organe d'étanchéité (42) configuré pour être disposé entre le puits de jauge (8) et le pistolet (22).

9. Système d'injection (20) selon la revendication précédente, dans lequel l'organe d'étanchéité (42) est un joint torique.

10. Ensemble de test comprenant un réservoir de stockage (2) selon l'une des revendications 1 et 2 et un système d'injection (20) selon l'une des revendications 3 à 9.

11. Procédé de test de mise en pression du réservoir de stockage (2) selon l'une des revendications 1 et 2 utilisant le système d'injection (20) selon l'une quelconque des revendications 6 à 9, comprenant au moins :
- une étape d'insertion du pistolet (22) dans le puits de jauge (8),
- une étape de coopération de l'organe de maintien (32) avec la gorge (12) du puits de jauge (8),
- une étape de mise en pression du réservoir de stockage (2) par injection de fluide au travers du puits de jauge (8).

12. Procédé de test selon la revendication précédente en combinaison avec les revendications 3 et 4, dans lequel au cours de l'étape de coopération la nervure (34) de la lame incurvée glisse dans la gorge (12) du puits de jauge (8).

13. Procédé de test selon la revendication 11 en combinaison avec les revendications 3 et 5, dans lequel au cours de l'étape de coopération la nervure (34) des griffes vient en prise dans la gorge (12) du puits de jauge (8).
